# EUROPEAN PATENT SPECIFICATION

(11) **EP 1 729 535 B1**
(45) Date of publication and mention of the grant of the patent: **16.03.2011**
(21) Application number: 05795443.0
(22) Date of filing: 30.09.2005
(51) Int. Cl.: H04W 4/06, H04L 12/56, H04L 29/06

(54) **RECOUNTING METHOD AND SYSTEM IN MULTIMEDIA BROADCAST/MULTICAST SERVICE**
NACHZÄHLUNGSVERFAHREN UND -SYSTEM IM MULTIMEDIA BROADCAST/MULTICAST SERVICE (MBMS)
PROCEDE ET SYSTEME DE DECOMPTE DANS UN SERVICE DE DIFFUSION/MULTIDIFFUSION DE MULTIMEDIAS

(30) Priority: 30.09.2004 CN 200410079356
(43) Date of publication of application: 06.12.2006
(73) Proprietor: Huawei Technologies Co., Ltd., Longgang District, Shenzhen Guangdong 518129 (CN)
(72) Inventor: WANG, Yanhong, Huawei Administration Building, Shenzhen, Guangdong 518129 (CN); HU, Hao, Huawei Administration Building, Shenzhen, Guangdong 518129 (CN)
(74) Representative: Reinhard - Skuhra - Weise & Partner GbR
(86) International application number: PCT/CN2005/001632
(87) International publication number: WO 2006/034656

(56) References cited:
- WO-A-2005/006596
- CN-A- 1 486 005
- CN-A- 1 518 255
- US-A1- 2004 185 837
- "UNIVERSAL MOBILE TELECOMMUNICATIONS SYSTE (UMTS)" ETSI STANDARDS, EUROPEAN TELECOMMUNICATIONS STANDARDS INSTITUTE, SOPHIA-ANTIPO, FR, no. V600, 31 March 2004 (2004-03-31), pages 1-52, XP002367431 ISSN: 0000-0001
- NORTEL NETWORKS/ SAMSUNG: "MBMS Scenarios - UE Link Handling" 3GPP TSG-RAN2/RAN3 #35 MEETING, 3 April 2003 (2003-04-03), pages 1-7, XP002292826

## Description

### Field of the Invention

The present invention relates to techniques for implementing Multimedia Broadcast/Multicast Service (MBMS), and more particularly, to a recounting technique in Multimedia Broadcast/Multicast Service.

### Background of the Invention

In a communication system, multicast and broadcast are techniques for transferring data from one source to multiple destinations. For instance, in the Ethernet, the Internet Group Management Protocol (IGMP) is an Internet Protocol (IP) multicast technique for the use of multicast.

With development of mobile communications, multicast and broadcast are applied more and more in mobile networks. For example, in a traditional mobile network, the Cell Broadcast Service (CBS) allows low bit-rate data to be transferred to all users via a shared broadcasting channel of a cell. This service is categorized as a message service.

At present, voice and message services can not satisfy people's requirements for mobile communications. Along with the rapid development of the Internet, a great number of multimedia services emerge. Some application services therein require that multiple users are able to receive same data simultaneously, e.g. video on demand, videocast, video conference, network-based education and interactive video games. These multimedia services are featured with large data flow, long time duration and high sensitivity to time delay in comparison to the conventional data. The existing techniques of the IP multicast make it possible to implement these multimedia services in form of multicast or broadcast on cabled IP networks. However, as mobile networks have special network architecture, functional entities and radio interfaces, which are all different from those of a cabled IP network, existing IP multicast techniques are not applicable to mobile networks.

In order to solve the above problem and make an efficient use of resources of mobile networks, the Wideband Code Division Multiple Access (WCDMA)/Global System for mobile Communication (GSM) and the 3^{rd} Generation Partnership Project (3GPP), have put forward the Multimedia Broadcast/Multicast Service (MBMS), designed to provide services of forwarding data from one source to multiple users in mobile networks so as to share and improve the utility rate of network resources, especially the utility rate of radio interface resources. The MBMS defined by the 3GPP can implement not only multicast and broadcast of low-rate text messages, but also multicast and broadcast of high-rate multimedia traffic, which is no doubt in accordance with the trend of future development of mobile data.

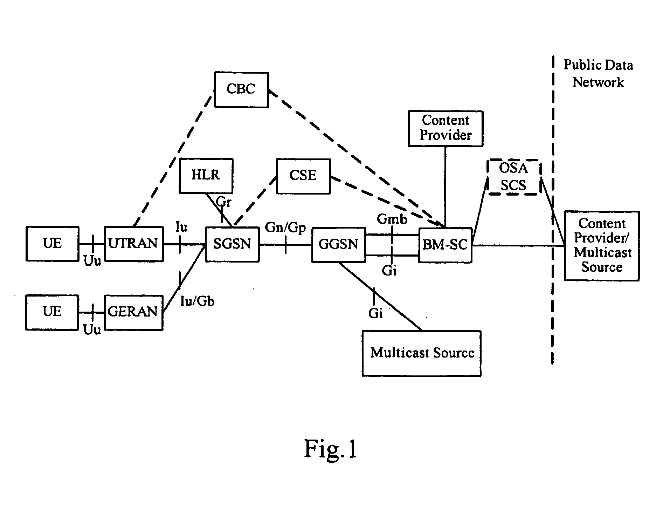

System architecture of MBMS defined by the 3GPP is as shown in Fig. 1, wherein the Broadcast Multicast-Service Center (BM-SC), a newly-added mobile network functional entity supporting MBMS, is the entrance of content providers and is used to authorize, initiate an MBMS bearer service in the mobile networks and transfer MBMS contents according to a predefined time schedule. In addition, functional entities, such as user equipment (UE), a UMTS Terrestrial Radio Access Network (UTRAN), a GSM EDGE Radio Access Network (GERAN), a Serving GPRS Support Node (SGSN) and a GPRS Gateway Support Node (GGSN), are enhanced to incorporate relevant functions of MBMS.

The MBMS is implemented in two modes, the multicast mode and the broadcast mode. As there is difference between the multicast mode and the broadcast mode in service demands, the service procedures thereof are different.

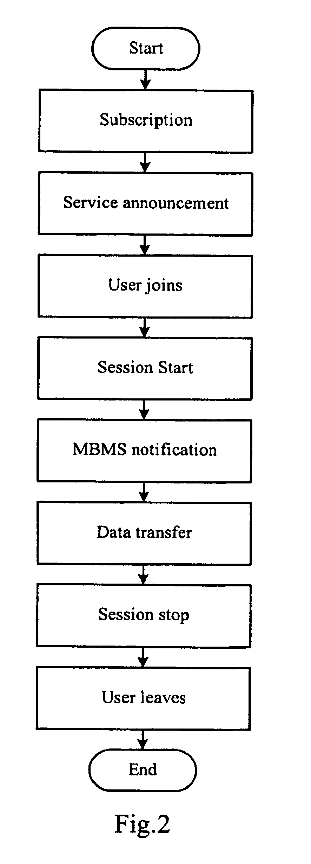

The flowchart of MBMS multicast mode is as shown in Fig. 2.

In the MBMS multicast mode, a user joins an MBMS multicast service by an MBMS activation procedure so that the network could know which user desires to receive some particular MBMS service. The network nodes create, through an MBMS registration procedure, a distribution tree from a BM-SC to a Base Station Controller (BSC)/Radio Network Controller (RNC) via a GGSN and SGSN so as to allow the session attributes and data of MBMS to be transferred. The registration procedure creates an MBMS bearer context at relevant nodes. When the BM-SC is ready for transferring data, an MBMS Session Start procedure will be triggered. The Session Start procedure activates all requested bearer resources for transferring MBMS data in the network and notifies the interested UEs (As used herein and hereafter, the term "UEs" encompasses zero, one or more UEs.) that the data transfer is about to start. By this procedure, the BM-SC provides the interested and relevant network nodes with the session attributes, such as Quality of Service (QoS), MBMS Service Area and parameter of estimated session duration. This procedure also triggers such procedures as session notification, counting of cell users, selection of radio bearer type, set-up of radio and cabled bearer planes on the access network by the RNC. The BM-SC starts transferring multicast data after the down-stream nodes completing corresponding jobs. Each node transfers the multicast data to the UEs through the bearer created in the Session Start procedure.

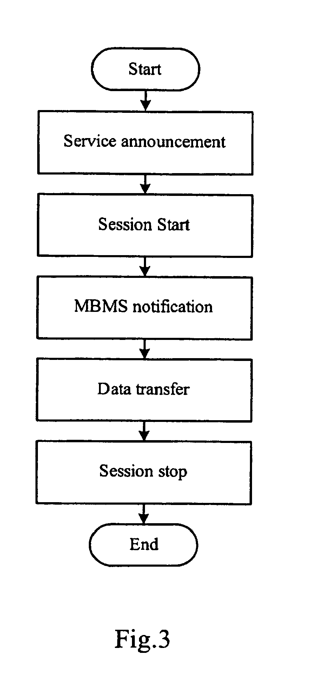

The service procedure of MBMS broadcast mode is as shown in Fig. 3.

In the MBMS broadcast mode, as information of a broadcast service is sent to all users in the radio network, each network node does not need to implement the MBMS registration procedure. When the BM-SC is ready for transferring data, an MBMS Session Start procedure is triggered which activates all the bearer resources requested by transferring MBMS data in the network. By this procedure, the BM-SC provides the relevant interested network nodes with the session attributes, such as the Terminal Mobile Group Identity (TMGI) of the MBMS bearer service, QoS, MBMS Service Area, and parameter of estimated session duration (if there is). This procedure also triggers such jobs as set-up of radio and cabled bearer planes. The BM-SC starts transferring broadcast data after the down-stream nodes completing corresponding jobs. Each node transfers the broadcast data to the UEs through the bearer created in the Session Start procedure.

It can be seen by persons skilled in the art that the main service procedures of MBMS broadcast mode and multicast mode are similar, both including the process of the successive procedures of Service announcement, Session Start, MBMS notification, Data transfer, and Session Stop. The difference between the two modes lies in that the multicast mode also includes the step for the UE subscribing to the appropriate multicast group, activating the MBMS service, and generating corresponding accounting information based on the time when the UE joins and leaves.

There are two modes of MBMS data transfer between the UTRAN and the UE: the point to multipoint (PTM) transmission mode and point to point (PTP) transmission mode. In the PTM transmission mode, the same data are sent via an MBMS PTM traffic channel (MTCH), and may be received by all UEs having joined the multicast service or interested in the broadcast service. In the PTP transmission mode, the data are sent via a dedicated traffic channel (DTCH), and can be received only by an appropriate UE.

As there may be different numbers of users receiving the MBMS service in one cell, one MBMS service may be provided in one cell in two modes. One is the PTP transmission mode, the other is the PTM transmission mode. As power control can be used in the PTP transmission mode, this mode is used when there are fewer users. If the number of users increases, the PTP transmission mode will consume a lot of radio resources and the transmitting power of the base station may have to become higher. If the PTM transmission mode is used when there are more users, not only the resources of radio interface but also the transmitting power of the base station will be saved. In order to make the radio access network (RAN) obtain the number of users in each cell who demand a particular MBMS service, the MBMS system introduces a counting procedure and a recounting procedure.

The counting procedure refers to the procedure of the RAN counting the number of users who receive a particular MBMS service when an MBMS session starts, while the recounting procedure is introduced because it is necessary to recount the users during the MBMS session so as to determine whether the PTM transmission mode is still the currently suitable bearer mode.

The present invention is aimed primarily at the recounting procedure requested by recounting the number of users during MBMS data transfer.

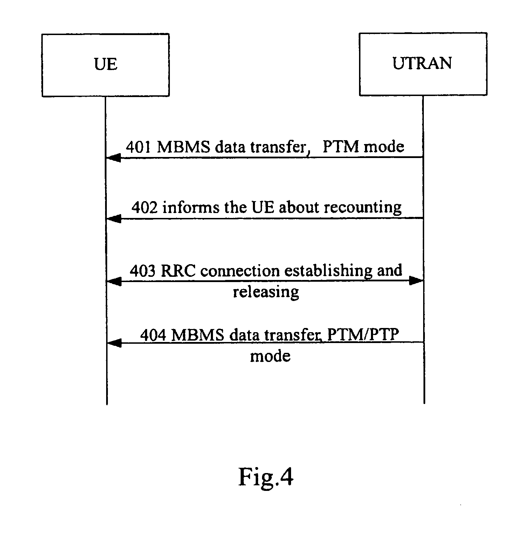

The steps for MBMS recounting defined in 3GPP TS 25.346 version 6.0.0 Release 6 "Universal Mobile Telecommunications System (UMTS); Introduction of Multimedia Broadcast/Multicast Service (MBMS) in the Radio Access Network (RAN)" are as shown in Fig. 4, which specifically include:
Step 401: a UTRAN transfers MBMS bearer service data to UEs in the PTM transmission mode.
Step 402: when the UTRAN prepares a recounting procedure, it sets the MBMS recounting indication information for the MBMS service and informs the UEs of the MBMS recounting indication information via a common control channel, and at the same time adds the MBMS service identity and access probability factor of the MBMS service to the MBMS access information of the MBMS point-to-multipoint Control Channel (MCCH). It is understood to persons skilled in the art that the reason for using the access probability factor (simplified as probability factor) is that there is no need for all UEs to set up connection to send feedbacks, it is only required that the number of feed-backs reaches a threshold; otherwise, more UEs in the idle mode sending feedbacks may cause uplink block.
Step 403: in the receiving time period of discontinuous reception (DRX), it is necessary for both the UE in the idle mode and connected UE to detect the recounting indication information. If the recounting indication information has been set for this MBMS service, the UE in the idle mode checks the probability factor, and initiates an RRC connection establishing procedure after passing the probability factor check. The probability factor is a random decimal between 0 and 1, the checking procedure of which includes: the UE randomly generates a random decimal between 0 and 1, decides whether the generated random is less than the received probability factor. If the generated random decimal is less than the received probability factor, the check of probability factor will be passed; otherwise it will not be passed.
   Meanwhile the connected UE ignores this MBMS access information of the MCCH, as generally speaking, the UTRAN knows at which cell the connected UE are located and does not need the feedback.
Step 404: the UTRAN obtains the information of the UEs interested in the MBMS service from a Core Net (CN) through a UE linking procedure, and carries out counting. The UE linking is a procedure of an Iu interface (the standard interface between a RNC and a CN), which can enable the RNC in the UTRAN to obtain the information of all services which the UEs have joined from the CN.

If the counting result shows that the pre-defined threshold has been reached, the UTRAN will continue using the PTM transmission mode. Otherwise, the UTRAN will repeat the counting procedure with different probability factor values, if the threshold has not been reached during each counting procedure, it is necessary for the UTRAN to change from the PTM transmission mode to the PTP transmission mode.

If the UTRAN still uses the PTM transmission mode, the UTRAN may make the UEs return to the idle mode by an RRC connection releasing procedure.

However, there are the following problems with the above solution: the recounting result during MBMS data transfer is not accurate, which sometimes may cause the UTRAN setting up an unsuitable bearer mode for the cell.

The main reason for this problem is that the purpose of the counting procedure is to determine the number of the UEs which receive a particular MBMS service within a cell. As specified in the present protocol, only the concrete cell locations in the UTRAN of the UEs in the idle mode and the UEs in a state of UTRAN Registration Area Paging Channel (URA-PCH) can not be determined. Therefore, if it is desired to obtain accurate number of the UEs which receive a particular MBMS service, it is necessary to take the number of UEs in these two states into consideration.

According to the present MBMS protocol, only the UEs in the idle mode are taken into consideration when recounting. In fact, as described above, if a UE is in the URA-PCH state, the UTRAN does not know at which specific cell this UE is located. If the UEs in this state are not counted, it is quite likely to make the accuracy of recounting mistaken.

Specifically speaking, in the present protocol, no connected UE responds to the recounting indication as it is generally believed that the UTRAN knows at which cell the connected UEs are located. The present protocol, however, has not taken the URA-PCH state which is somewhat special into consideration. The URA-PCH state is a connected state, but it is only possible to know at which URA the UEs in the URA-PCH state are located rather than which cell they are in. When there is no service, the UEs may switch to the CELL-PCH state and do not receive any signal in normal time, except for receiving signals at the agreed time with the network and reporting the information to the uplink when the located cell changes every time, that has an effect of saving power. The information reported to the uplink will be over frequent if the UEs move rather fast. Therefore, in order to avoid this situation, a UE in the CELL-PCH state will switch to the URA-PCH state if there is no service for a long time. Then the UE will not report the change of cell at which it is located to the network if it is still in the same URA, which may include several cells. In this way, power can be further saved. Therefore, the network does not know the cell at which the UE in the URA-PCH state is located.

Since the switching threshold between the PTM and the PTP is usually rather low, in some cases, even the difference of one or two users may cause the UTRAN establishing an unsuitable bearer mode for a cell so as to make the recounting meaningless and even have a negative impact in some cases. For example, a switch from the PTM to the PTP when a UE is receiving an MBMS service will make the UE unable to receive signals of the MBMS service.

A PCT application WO 2005/006596, which is filed on July 8th 2004 and published on Jan 20^{th} 2005, discloses a method for initiating uplink signaling proactively by the MBMS UE, in which the UE in URA_PCH mode and IDLE mode can response to the MBMS Notification message sent by the RNC and is relevant for the purpose of Article 54(3)EPC.

Further, a 3GPP TSG-RAN2/RAN3 #35 Meeting document discloses a technical scheme about when and through which interface these information are provided to the RNC.

### Summary of the Invention

In view of the above, embodiments of the present invention provide a method, UE and a system for recounting the number of the users in the MBMS service so as to make the recounting during MBMS data transfer more accurate and the selection of the MBMS bearer mode by the access network more suitable.

In order to achieve the above object, the technical solution of the present invention is implemented as follows:
a method for recounting in Multimedia Broadcast/Multicast Service (MBMS), when a radio access network (RAN) is preparing to initiate a Recounting procedure, includes the following steps:
   the RAN sending recounting indication information for an MBMS service and MBMS access information to User Equipment (UE) or UEs located in the RAN coverage area, the recounting information being sent during use of a point-to-multipoint (PTM) transmission mode;
   the UE(s) detecting the recounting indication information and responding to the recounting indication information, wherein the UE(s) in an idle mode establishes a radio resource control, RRC, connection according to the recounting indication information and received MBMS access information to respond to the recounting indication information, and
   the UE(s) in a UTRAN Registration Area Paging Channel, URA-PCH, state initiates a cell update procedure according to the recounting indication information and received MBMS access information to respond to the recounting indication information; and
   the RAN counting the number of the UE(s) which have joined the MBMS service and are within a cell according to the state of the UE respectively, wherein the number of UE(s) including the number of UE(s) in the idle mode and have joined the MBMS service, and the number of UE(s) in the URA-PCH state and have joined the MBMS service;
   the RAN determining whether the number of UE(s) reaches a pre-defined threshold for determining whether to continue to use the PTM transmission mode;
   the RAN continuing to use the PTM transmission mode if the number of UE(s) reaches the pre-defined threshold;
   the RAN switching transmission mode from the PTM transmission mode to a PTP transmission mode if the number of UE(s) does not reach the pre-defined threshold.

The step for a RAN sending the recounting indication information and the MBMS access information includes:
the RAN setting the recounting indication information to comprise an MBMS service identity, adding the MBMS service identity and a first probability factor to the MBMS access information, and sending the recounting indication information and the MBMS access information to the UE(s) via an MBMS point-to-multipoint Control Channel (MCCH), respectively.

The step for the UE(s) detecting the recounting indication information and responding to the recounting indication information includes:
the UE(s) in the idle mode receiving the MBMS access information, finding the first probability factor of the MBMS service identity which is identical to that in the recounting indication information, checking the first probability factor, and responding to the recounting indication information by initiating the RRC connection establishment procedure if the check is passed; and
the UE(s) in the URA-PCH state receiving the MBMS access information, finding the first probability factor of the MBMS service identity which is identical to that in the recounting indication information, checking the first probability factor, and responding to the recounting indication information by initiating the cell update procedure respectively if the check is passed.

The method further includes: before sending the recounting indication information, the RAN counting the number of the UE(s) within the RAN being in the URA-PCH state and deciding whether to use a second probability factor for the UE(s) within the RAN being in the URA-PCH state according to the counting result;
if the second probability factor is decided to be used, the RAN setting the recounting indication information which comprises the MBMS service identity and indicates that the second probability factor is used therein, adding the MBMS service identity, the first probability factor, and the second probability factor to the MBMS access information and sending the recounting indication information and the MBMS access information to the UE(s) via the MCCH, respectively.

The step for determining whether to use the second probability factor for the UE(s) within the RAN being in the URA-PCH state according to the counting result includes:
the RAN estimating the value of the second probability factor according to the number of the UE(s) within the RAN being in the URA-PCH state, small, using a greater second probability factor, if the number is large using a less second probability factor; if the estimated second probability factor is close to the first probability factor, choosing the first probability factor instead of the second probability factor; otherwise, choosing the second probability factor.

Whether the number of the UE(s) within the RAN being in the URA-PCH state is small or large is determined by a pre-defined threshold of the number of the UE(s) within the RAN being in the URA-PCH state;
and whether the estimated second probability factor is close to the first access probability factor is determined by a pre-defined range of difference value between the probability factors, if the difference value is within the range, the factors are close; if the difference is beyond the range the factors are not close.

If the RAN decides to use the second probability factor for the UE(s) within the RAN being in the URA-PCH state, the step for the UE(s) detecting the recounting indication information and responding to the recounting indication information includes:
upon reception of the MBMS access information, the UE(s) in the idle mode reading the first probability factor of the MBMS service identity which is identical to that in the recounting indication information and checking the first probability factor; the UE(s) in the idle mode that passed the check initiating the RRC connection establishment procedure;
upon reception of the MBMS access information, the UE(s) in the URA-PCH state reading the second probability factor of the MBMS service identity which is identical to that in the recounting indication information and checking the second probability factor; the UE(s) in the URA-PCH state which passed the check initiating the cell update procedure.

The method according further includes:
a UE in a cell paging channel (CELL-PCH) state detecting the recounting indication information, receiving the MBMS access information, and finding the probability factor corresponding to the MBMS service identity which is identical to the MBMS service identity in the recounting indication information, checking this probability factor; after passing the check, responding to the recounting indication information by initiating the cell updating procedure;
or a UE in a cell-forward access channel (CELL-FACH) state monitoring the recounting indication information, receiving the MBMS access information, finding the probability factor corresponding to the MBMS service identity which is identical to the MBMS service identity in the recounting indication information, checking the probability factor; after passing the check, responding to the recounting indication information by initiating a cell update procedure or responding via control channel.

The step for the UE(s) detecting the recounting indication information includes:
monitoring the MCCH to receive a notification message and detecting recounting indication information for an MBMS service in the notification message received from the MCCH.

The step for the RAN counting the number of the UE(s) which have joined the MBMS service and are within a cell according to the state of the UE(s) respectively includes: the RAN counting the UE(s) interested in the MBMS service by combining the UE linking from the CN and the received counting response from the UE.

The RAN counting the number of the UE(s) within the RAN being in the URA-PCH state before sending the recounting indication information, if the number of the UE(s) within the RAN being in the URA-PCH state is large, the RAN indicating that needs to recount the number of the UE(s) in the URA-PCH state which have joined the MBMS service and are within the cell through the recounting indication information.

Whether the number of the UE(s) within the RAN being in the URA-PCH state is small or large is determined by defining a threshold of the number of the UE(s) within the RAN being in the URA-PCH state or by pre-defining a threshold of ratio of the UE(s) in the URA-PCH state among all of the UE(s) within the RAN being in the RRC connected state.

The RAN counting the number of the UE(s) in each state of the CELL-FACH and the CELL-PCH before sending the recounting indication information, if the counting result shows that the total number of the UE(s) in those two states reaches the threshold for determining whether to use the point-to-multipoint (PTM) transmission mode, the RAN stopping the recounting procedure.

Before sending the recounting indication information, the RAN counting the number of the UE(s) in each state of the CELL-FACH and the CELL-PCH before sending the recounting indication information, if the counting result shows that the total number of the UE(s) in those two states reaches the threshold for determining whether to use the point-to-multipoint (PTM) transmission mode, the RAN querying the UE(s) in those two states whether interested in receiving the MBMS service and performing the recounting procedure again until the threshold used for determining whether to use the PTM transmission mode is reached.

Whether the total number of the UE(s) in those two states added together exceeds the threshold much, which is used for determining whether to use the PTM transmission mode, is determined by setting a threshold of exceeding number.

The RAN makes query of the UE(s) in the two connected states directly via a dedicated or the common channel.

The RAN counting the number of the UE(s) in each connected state of the CELL-FACH and the CELL-PCH before sending the recounting indication information, if the counting result shows that the number of the UE(s) in these two states added together is not close to the threshold for determining whether to use the PTM transmission mode, the RAN indicating that needs to recount the number of the UE(s) in the URA-PCH state which have joined the MBMS service and are within the cell through the recounting indication information.

Whether the number of the UE(s) in the two states added together is close to the threshold is determined by a pre-defined range for being close to the threshold, if the number is within the range, it is close to the threshold; otherwise, it is not close to the threshold.

The method further includes:
the UE in the CELL-PCH state, detecting the recounting indication information and responding to the recounting indication information by initiating the cell updating procedure according to the recounting indication information and the received MBMS access information;
or the UE in the CELL-FACH state detecting the recounting indication information and responding to the recounting indication information by initiating the cell update procedure or responding via the control channel according to the recounting indication information and the received MBMS access information.

The method further includes: if the counting result of the number of the UE(s) is less than the pre-defined threshold for determining whether to use the PTM transmission mode, repeating the recounting procedure for pre-defined times, if the results of the repeated recounting for continuous pre-defined times are all less than the threshold for determining whether to use the PTM transmission mode, determining to use the PTP transmission mode.

The method further includes: the RAN determining to use the PTM transmission mode, making the UE(s) return to the idle mode by an RRC connection releasing procedure or making the UE(s) in the URA-PCH state return to the previous state.

An embodiment of the present invention also provides a system for recounting in Multimedia Broadcast/Multicast Service, MBMS, which includes:
at least one UE, comprising:
   a first module, for detecting recounting indication information for an MBMS service (502);
   a second module, for detecting MBMS access information;
   a third module, for responding to the recounting indication information by establishing a radio resource control, RRC, connection according to the recounting indication information and MBMS access information (505) received when the UE is in idle mode; and
   a forth module, for responding to the recounting indication information by initiating a cell update procedure according to the recounting indication information and MBMS access information (505) received when the UE is in a UTRAN Registration Area Paging Channel, URA-PCH, state
   ; and
   a radio access network, RAN, for sending recounting indication information and the MBMS access information to User Equipment, UE, or UEs (501) located in the RAN coverage area, the recounting information being sent during use of a point-to-multipoint (PTM) transmission mode;
   counting the number of UE(s) which have joined the MBMS service and are within a cell according to the state of the UE(s) respectively (507), wherein the number of UE(s) including the number of UE(s) in the idle mode and have joined the MBMS service, and the number of UE(s) in the URA-PCH state and have joined the MBMS service;
   determining whether the number of UE(s) reaches a pre-defined threshold for determining whether to continue to use the PTM transmission mode;
   continuing to use the PTM transmission mode if the number of UE(s) reaches the pre-defined threshold;
   switching transmission mode from the PTM transmission mode to a PTP transmission mode if the number ofUE(s) does not reach the pre-defined threshold.

It can be seen from the above solution that the method for recounting the number of the UEs in an MBMS in accordance with the present invention not only make the UEs in the idle mode recounted, but also make the UEs in the URA-PCH state recounted according to the needs so that the number obtained by recounting is more accurate, the selection made between the PTM and PTP transmission mode is more appropriate, and the UEs needing to receive the service when the PTM transmission mode is switched to the PTP transmission mode are guaranteed to be able to receive the service signals.

In addition, an access probability factor for the URA-PCH state may be used in the present invention so that the counting result of the UEs in the idle mode and URA-PCH state could be more reliable.

Furthermore, the present invention makes it possible to recount the number of the UEs according to the numbers of UEs in the CELL-FACH and CELL-PCH states so that decisions based on counting results of higher accuracy could be made in many cases with less system resources consumed.

### Brief Description of the Drawings

Fig. 1 shows system architecture of an MBMS defined by the 3GPP;
Fig. 2 shows a flowchart for an MBMS in the multicast mode;
Fig. 3 shows a flowchart for an MBMS in the broadcast mode;
Fig. 4 shows a flowchart for recounting in an MBMS according to the present protocol;
Fig. 5 shows a flowchart for recounting during MBMS data transfer in a first preferred embodiment in accordance with the present invention;
Fig. 6 shows a flowchart for recounting during MBMS data transfer in a second preferred embodiment in accordance with the present invention.

### Embodiments of the Invention

The present invention is hereinafter described in detail with reference to the accompanying drawings and exemplary embodiments so that the object, solution, and merits thereof could be more apparent.

The idea of the present invention makes it possible to recount not only the number of the UEs in the idle mode but also the number of the UEs in the URA-PCH state according to the recounting indication information.

In the present invention, the network side indicates whether to recount only the number of the UEs in the idle mode or to recount the number of the UEs in both idle mode and the URA-PCH state through the recounting indication information. The UEs in the idle mode and the UEs in the URA-PCH state respond to the recounting indication information according to the indication.

In the present invention, the network either provides an access probability factor for the use of the UEs in the URA-PCH state or just uses the access probability factor for the use of the UEs in the idle mode. Whether to provide this factor for the use of the UEs in the URA-PCH state can be decided by the network based on the number of the UEs in the URA-PCH state in the particular URA. Or the network just separately sets the factor for the UEs in the URA-PCH state. It is a matter of how to implement the method.

The present invention can be implemented in various ways. Hereinafter six preferred embodiments are described in detail.

### First preferred embodiment:

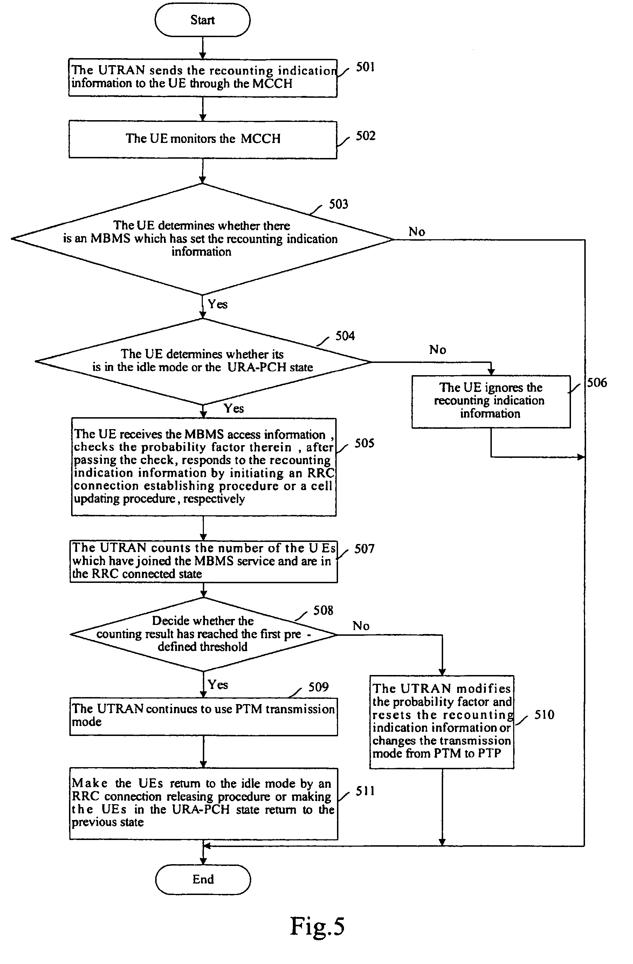

Referring to Fig. 5, which is a flowchart for recounting during MBMS data transfer in accordance with the first preferred embodiment of the present invention. The specific procedure includes following steps:
Step 501: when preparing to initiate a recounting procedure, the UTRAN sets the recounting indication information that includes an MBMS service identity, meanwhile, adds the MBMS service identity and an access probability factor to MBMS access information, and notifies UEs of the recounting indication information and the MBMS access information via an MCCH, respectively.
   The notifying method of this embodiment is known by a person skilled in the art, and a detailed description is omitted here.
Step 502: the UE monitors the MCCH. After the UE receives the recounting indication information, go to Step 503.
Step 503: the UE detects whether an MBMS service has set the recounting indication information. If an MBMS service has set the recounting indication information, go to Step 504; otherwise, terminate the counting procedure.
Step 504: the UE detects whether it is in the idle mode or in the URA-PCH state. If it is in the idle mode or in the URA-PCH state, go to Step 505; otherwise, go to Step 506.
Step 505: the UE receives the MBMS access information, finds the probability factor of which MBMS service identity is identical to that in the recounting indication information, and checks the probability factor. If the UE passes the probability check, the UE initiates an RRC connection establishing procedure or a cell updating procedure for responding to recounting response, and goes to Step 507; if the UE does not pass the probability check, the UE terminates the counting procedure.
   In this step, the process of checking the probability factor is similar known by the person skilled in the art, and a detailed description is omitted here.
Step 506: the UE not in the URA-PCH state but in other RRC connected states ignores the recounting indication information and terminates the counting procedure.
   The UE in the idle mode responds to the recounting indication by performing an RRC connection procedure and the UE in the URA-PCH state responds to the recounting indication by performing a cell updating procedure. Of course, the UEs in the CELL-FACH and the CELL-PCH states in this embodiment can also respond to the recounting indication. Therefore, all related UEs can be recounted together, thereby improving the recounting accuracy.
Step 507: the UTRAN counts the number of the UEs which are in the RRC connected state and have joined the MBMS service.
   In this step, the UTRAN obtains the information about whether the UEs in the RRC connected state have joined the MBMS service from the CN through the UE linking procedure, and counts the number of the UEs which are in the connection state and have joined the MBMS service.
Step 508: the UTRAN decides whether the counting result has reached the pre-defined first threshold for determining whether to use the PTM transmission mode. If the counting result has reached the pre-defined first threshold, go to Step 509; otherwise, go to Step 510.
Step 509: the UTRAN goes on to use the PTM transmission mode. Go to Step 511.
Step 510: the UTRAN modifies the probability factor and resets the recounting indication information, or changes the transmission mode from the PTM to the PTP. Terminate this procedure.
   In this embodiment, if the recounting result does not reach the first predefined threshold before recounting has been repeated for the pre-defined times in this step, the probability factor can be increased and the recounting can be repeated; if the result of recounting has continuously failed to reach the first predefined threshold for the pre-defined times in this step, the UTRAN changes the transmission mode from the PTM to the PTP.
Step 511: the UEs return to the idle mode through the RRC connection releasing procedure, or the UEs currently in the URA-PCH state return to the previous state. Terminate this procedure.

It can be noted that, the counted UEs may be kept in the RRC connected state as well.

### Second preferred embodiment:

In this embodiment, the network side decides whether to use the second probability factor for the UEs in the URA-PCH state according to the number of the UEs in the URA-PCH state, and the UEs in the URA-PCH state decide whether to use the first probability factor generally used or use the second probability factor according to the recounting indication information. In this embodiment, it is supposed that the UEs in the idle mode use the first probability factor generally used while the UEs in the URA-PCH state use the second probability factor.

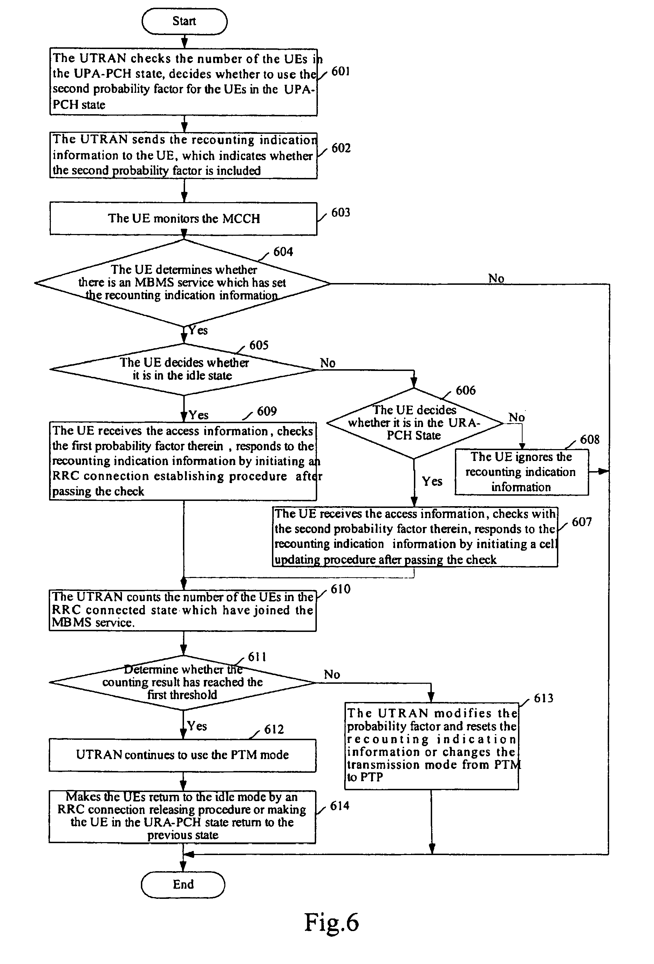

Referring to Fig. 6, a flowchart for recounting during MBMS data transfer of the second embodiment in accordance with the present invention, the procedure includes the steps of:
Step 601: a UTRAN checks the number of the UEs in the URA-PCH state, and decides whether to use a second probability factor for the UEs in the URA-PCH state. If it is decided to use the second probability factor, go to Step 602; otherwise, perform the procedure as shown in Fig. 5.
   In this step, the UTRAN may predefine a threshold of the number of the UEs in the URA-PCH state; if the number of the UEs in the URA-PCH state has reached or exceeded the threshold, it is decided to use the second probability factor. In this embodiment, it is supposed that the second probability factor is used.
   When counting the number of the UEs in the URA-PCH state, whether it is needed to use the second probability factor, estimation of how large a probability factor is desirable can be made based on the number of the UEs in the URA-PCH state firstly. The method of estimation is that a larger probability factor can be used when the number of the UEs in the URA-PCH state is small, whereas a smaller probability factor is used when the number of the UEs is great. If the estimated probability factor is close to the access probability factor generally used for the UEs in the idle mode, it is decided that the first probability factor is used and the second probability factor is not needed; otherwise it is decided that the second access probability factor is needed. Whether the estimated probability factor is close to the first probability factor generally used for the UE in the idle mode can be decided by pre-defining a difference range of probability factor, if the difference is within the range, the two factors are close; otherwise, they are not close.
Step 602: the UTRAN transfers recounting indication information to the UEs via an MCCH, and includes a second probability factor in the MBMS access information.
   Specifically speaking, the UTRAN sets the recounting indication information that includes an MBMS service identity, meanwhile, adds the MBMS service identity, the first probability factor and the second probability factor to the MBMS access information, and notifies the UEs of the recounting indication information and the MBMS access information via the MCCH, respectively.
Step 603: the UE monitors the MCCH, and goes to Step 604 after receiving the indication information.
Step 604: the UE detects whether an MBMS service has set recounting indication information. If an MBMS service has set recounting indication information, go to Step 605; otherwise, terminate the counting procedure.
Step 605: the UE decides whether it is in the idle mode. If it is in the idle mode, go to Step 609; otherwise, go to Step 606.
Step 606: the UE decides whether it is in the URA-PCH state. If it is in the URA-PCH state, go to Step 607; otherwise, go to Step 608.
Step 607: the UE receives the MBMS access information, uses the second provability factor thereof to carry on a probability check and responds to the recounting indication information after passing the check by initiating a cell updating procedure. If the UE fails in passing the check, terminate the counting procedure.
Step 608: the UE in the CELL-PCH state receives the MBMS access information, uses the first provability factor thereof to carry on a probability check and responds to the recounting indication information after passing the check by initiating a cell updating procedure; or the UE in the CELL-FACH state receives the MBMS access information, uses the first provability factor thereof to carry on a probability check, and responds to the recounting indication information after passing the check by initiating a cell updating procedure or responds to the recounting indication information via the control channel.
   However, special probability factors may be set for the UE in these two states respectively, or one probability factor is used for the UE in different states.
Step 609: the UE receives the MBMS access information, uses the first probability factor thereof to carry on a probability check and responds to the recounting indication information after passing the check by initiating an RRC connection establishing procedure. If the UE fails in passing the check, terminate the counting procedure.
Step 610: the UTRAN counts the number of the UEs which are in the RRC connected state and have joined this MBMS service.
   This step is completely the same as Step 507 which is as shown in Fig. 5, so no description will be repeated here.
Step 611: the UTRAN decides whether the counting result has reached the pre-defined first threshold. If the counting result has reached the pre-defined first threshold, go to Step 612; otherwise go to Step 613.
Step 612: the UTRAN continues to use the PTM transmission mode. Go to Step 614.
Step 613: the UTRAN modifies the probability factor and resets the recounting indication information, or changes the transmission mode from the PTM to the PTP.
   In the embodiment, if the recounting result does not reach the first pre-defined threshold before recounting has been implemented for the pre-defined times in this step, the probability factor can be increased and the recounting can be repeated. If in this step, the recounting result has continuously failed in reaching the first pre-defined threshold for the pre-defined times, the UTRAN will change the transmission mode from the PTM to the PTP.
Step 614: the UE returns to the idle mode through an RRC connection releasing procedure, or the UE currently in the URA-PCH state returns to the previous state. Terminate this procedure.

In this embodiment, the UE first decides whether it is in the idle mode, and then decides whether it is in the URA-PCH state. Of course, this order of making decision has no effect on the result and can be set at will.

### Third preferred embodiment:

In this embodiment, a step for deciding is added based on the first preferred embodiment, i.e. when preparing to initiate a recounting procedure, the UTRAN decides how many UEs are in the URA-PCH state, if the number of the UEs is very small, these UEs will not be counted. Whether the number of the UEs in the URA-PCH is small or large can be determined by setting a threshold of the number of the UEs in the URA-PCH state, or by setting a threshold of the ratio of the UEs in the URA-PCH state among all UEs in the RRC connected state, for example, if the UEs in the URA-PCH state are less than 5% of all of the UEs in the RRC connected state, it will be considered that the number of the UEs in the URA-PCH state is small.

Concretely speaking, when notifying the UEs, the network side indicates through the recounting indication information that no recounting is to be carried out for the UEs in the URA-PCH state. The UEs in the URA-PCH state, do not respond to this recounting indication information according to the indication after receiving this indication.

The advantage of doing so is that the step for the few UEs currently in the URA-PCH state returning to the previous state can be omitted when the UTRAN still uses the PTM transmission mode so that unnecessary resource occupation could be reduced.

### Fourth preferred embodiment:

This embodiment is an improvement of the first preferred embodiment. In this embodiment, when preparing to initiate a recounting procedure, the UTRAN first counts the number of the UEs in both the CELL-FACH and the CELL-PCH states, if the counting result shows that the number of the UEs in the two states added together is much larger than the threshold, no recounting will be carried out, i.e. this procedure is terminated. For example, when the total number of the UEs in the two states exceeds a pre-defined threshold of the exceeding number, no recounting will be carried out.

### It is believed that a certain ratio of the UEs in the connected state would receive the MBMS service, and when the total number of the UEs in the two states is large, a sufficient number of UEs are believed to receive the service. Therefore, this approach avoids unnecessary occupation of system resources in the recounting procedure.

### Fifth preferred embodiment:

This embodiment improves the fourth preferred embodiment. In this embodiment, when preparing to initiate a recounting procedure, the UTRAN will also count the number of the UEs in both the CELL-FACH and the CELL-PCH states. If the counting result shows that the number of the UEs in the two states added together is much larger than the threshold, the UEs in these two states are first inquired about whether they receive this MBMS service, then recounting is carried out if the counting result of the number of the UEs which receive the MBMS service is less than the threshold. The UTRAN may inquire the UEs in these two states directly via a dedicated or a common channel.

In addition, in this embodiment, the UTRAN may also adopt the approach described in the above second preferred embodiment, i.e. indicating that recounting is to be made for the UEs in the CELL-FACH and the CELL-PCH states through the recounting indication information. The UEs in the CELL-FACH and the CELL-PCH states are then counted according to the recounting indication information. This procedure is the same as Step 608 in Fig. 6, and is not repeated herein.

### Sixth preferred embodiment:

This embodiment also improves the fourth preferred embodiment. As in the fourth embodiment, the number of the UEs in both the CELL-FACH and the CELL-PCH states is counted firstly, if the counting result shows that the number of the UEs in these two states added together is already close to the threshold, then the network side indicates through the recounting indication information not to recount the number of the UEs in the URA-PCH state. After receiving this indication, the UEs in the URA-PCH state do not respond to this indication of recounting according to the indication.

Whether the number of the UEs in the two states added together is already close to the threshold is determined by pre-defining a range for being close to the threshold. If the number is within the range, it is close to the threshold, otherwise it is not close.

As the number of the UEs in the two connected states is already large, it is quite likely that the number of the UEs in the idle mode and the UEs in these two connected states has exceeded the threshold by querying, that is, the enquiry on the UEs in the URA-PCH state is omitted. The advantage of doing so is to omit the step of the UEs currently in the URA-PCH state returning to the previous state such that unnecessary occupation of resources could be avoided.

It can be seen from the above embodiments that the prominent feature of the present invention is that the UEs in the URA-PCH state also respond to the recounting indication. In the prior art, the UEs in the URA-PCH state which seldom occur to the mind of persons skilled in the art are ignored. However, in the procedure of MBMS recounting, as the selection of a bearer mode is sensitive to the counting result, a larger number of the UEs in the URA-PCH state may play a key role. Therefore, recounting in accordance with the present invention presents a more accurate counting result than in the prior art and the selection of an MBMS bearer mode by the UTRAN based on this counting result is more appropriate.

## Claims

1. A method for recounting in Multimedia Broadcast/Multicast Service, MBMS, when a radio access network, RAN, is preparing to initiate a Recounting procedure, comprising:
the RAN sending recounting indication information for an MBMS service and MBMS access information to User Equipment, UE, or UEs (501) located in the RAN coverage area, the recounting information being sent during use of a point-to-multipoint, PTM, transmission mode;
the UE or UEs is detecting the recounting indication information (502) and responding to the recounting indication information, wherein when the UE or UEs is in an idle mode said UE or UEs establishes a radio resource control, RRC, connection according to the recounting indication information and received MBMS access information (505) to respond to the recounting indication information,
the UE or UEs is in a UMTS Radio Acess Network, UTRAN, Registration Area Paging Channel, URA-PCH, state when initiates a cell update procedure according to the recounting indication information and received MBMS access information (505) to respond to the recounting indication information; and
the RAN counting the number of UEs which have joined the MBMS service and are within a cell according to the state of the UEs respectively (507), wherein the number of UES including the number of UEs in the idle mode and having joined the MBMS service, and the number of UEs in the URA-PCH state and having joined the MBMS service;
the RAN determining whether the number of UES reaches a pre-defined threshold for determining whether to continue to use the PTM transmission mode;
the RAN continuing to use the PTM transmission mode if the number of UEs reaches the pre-defined threshold;
the RAN switching transmission mode from the PTM transmission mode to a Point-to-Point PTP transmission mode if the number of UEs does not reach the pre-defined threshold.

2. The method according to Claim 1, wherein the step for a RAN sending the recounting indication information and the MBMS access information comprises:
setting the recounting indication information to comprise an MBMS service identity,
adding the MBMS service identity and a first probability factor to the MBMS access information, and
sending the recounting indication information and the MBMS access information to the UEs via an MBMS point-to-multipoint Control Channel, MCCH, respectively (501).

3. The method according to Claim 2, wherein the step for the UEs detecting the recounting indication information and responding to the recounting indication information comprises:
the UEs in the idle mode receiving the MBMS access information, finding the first probability factor of the MBMS service identity which is identical to that in the recounting indication information, checking the first probability factor, and responding to the recounting indication information by initiating the RRC connection establishment procedure if the check is passed; and
the UEs in the URA-PCH state receiving the MBMS access information, finding the first probability factor of the MBMS service identity which is identical to that in the recounting indication information, checking the first probability factor, and responding to the recounting indication information by initiating the cell update procedure if the check is passed.

4. The method according to Claim 2, further comprising:
before sending the recounting indication information, the RAN counting the number of UEs within the RAN being in the URA-PCH state, and deciding whether to use a second probability factor for the UEs within the RAN being in the URA-PCH state according to the counting result (601);
if the second probability factor is decided to be used, the RAN setting the recounting indication information which comprises the MBMS service identity and indicates that the second probability factor is used therein, adding the MBMS service identity, the first probability factor, and the second probability factor to the MBMS access information, and sending the recounting indication information and the MBMS access information to the UEs via the MCCH respectively (602).

5. The method according to Claim 4, wherein the step for determining whether to use the second probability factor for the UEs within the RAN being in the URA-PCH state according to the counting result (601) comprises:
the RAN estimating the value of the second probability factor according to the number of the UEs within the RAN being in the URA-PCH state, if the number is small, using a greater second probability factor, if the number is large, using a less second probability factor; if the estimated second probability factor is close to the first probability factor, choosing the first probability factor instead of the second probability factor; otherwise, choosing the second probability factor.

6. The method according to Claim 5, wherein whether the number of UEs within the RAN being in the URA-PCH state is small or large is determined by a pre-defined threshold of the number of UEs within the RAN being in the URA-PCH state;
and whether the estimated second probability factor is close to the first access probability factor is determined by a pre-defined range of difference between the probability factors, if the difference is within the range, the factors are close, if the difference is beyond the range the factors are not close.

7. The method according to Claim 4, if the RAN decides to use the second probability factor for the UEs within the RAN being in the URA-PCH state, wherein the step for the UEs detecting the recounting indication information and responding to the recounting indication information comprises:
upon reception of the MBMS access information, the UEs in the idle mode reading the first probability factor of the MBMS service identity which is identical to that in the recounting indication information and checking the first probability factor; the UEs in the idle mode that passed the check initiating the RRC connection establishment procedure (609);
upon reception of the MBMS access information, the UEs in the URA-PCH state reading the second probability factor of the MBMS service identity which is identical to that in the recounting indication information and checking the second probability factor; the UEs in the URA-PCH state which passed the check initiating the cell update procedure (607).

8. The method according to Claims 3 or 4, further comprising:
a UE in a cell paging channel, CELL-PCH, state detecting the recounting indication information, receiving the MBMS access information, and finding the probability factor corresponding to the MBMS service identity which is identical to the MBMS service identity in the recounting indication information, checking this probability factor; after passing the check, responding to the recounting indication information by initiating the cell updating procedure;
or a UE in a cell-forward access channel, CELL-FACH, state monitoring the recounting indication information, receiving the MBMS access information, finding the probability factor corresponding to the MBMS service identity which is identical to the MBMS service identity in the recounting indication information, checking the probability factor; after passing the check, responding to the recounting indication information by initiating a cell update procedure or responding via control channel.

9. The method according to Claim 1, wherein the step for the UEs detecting the recounting indication information (502) comprises:
monitoring the MCCH to receive a notification message; and
detecting recounting indication information for an MBMS service in the notification message received from the MCCH.

10. The method according to Claim 1, wherein the step for the RAN counting the number of the UEs which have joined the MBMS service and are within a cell according to the state of the UEs respectively comprises: the RAN counting the UEs interested in the MBMS service by combining the UE linking from the CN and the received counting response from the UE.

11. The method according to Claim 1, further comprising: the RAN counting the number of the UESs within the RAN being in the URA-PCH state before sending the recounting indication information, if the number of the UEs within the RAN being in the URA-PCH state is large, the RAN indicating that needs to recount the number of the UEs in the URA-PCH state which have joined the MBMS service and are within the cell through the recounting indication information.

12. The method according to Claim 11, wherein whether the number of UEs within the RAN being in the URA-PCH state is small or large is determined by defining a threshold of number of UEs within the RAN being in the URA-PCH state or by pre-defining a threshold of ratio of UEs within the RAN being in the URA-PCH state among all the UEs in the RRC connected state. UES

13. The method according to Claim 1, further comprising the RAN counting the number of UEs in each state of the CELL-FACH and the CELL-PCH before sending the recounting indication information; if the counting result shows that the total number of the UEs in those two states reaches the threshold for determining whether to use the point-to-multipoint, PTM transmission mode, the RAN stopping the recounting procedure.

14. The method according to Claim 1, further comprising the RAN counting the number of UEs in each state of the CELL-FACH and the CELL-PCH before sending the recounting indication information; if the counting result shows that the total number of the UEs in those two states reaches the threshold for determining whether to use the point-to-multipoint, PTM, transmission mode, the RAN querying UEs in these two states whether the UE(s) are interested in receiving and performing the recounting procedure again until the threshold used for determining whether to use the PTM transmission mode is reached.

15. The method according to Claims 13 or 14, wherein whether the total number of the UEs in those two states added together considerably exceeds the threshold much which is used for determining whether to use the PTM transmission mode is determined by setting a threshold of exceeding number.

16. The method according to Claim 14, wherein the RAN makes query of the UEs in the two connected states directly via a dedicated or common channel.

17. The method according to Claim 1, further comprising: the RAN counting the number of the UEs in the two connected states of CELL-FACH and CELL-PCH before sending the recounting indication information; if the counting result shows that the number of the UEs in those two states added together is not close to the threshold used for determining whether to use the PTM transmission mode, the RAN indicating that needs to recount the number of UEs in the URA-PCH state which have joined the MBMS service and are within the cell through the recounting indication information.

18. The method according to Claim 17, wherein whether the number of UEs in the two states added together is close to the threshold is determined by a pre-defined range for being close to the threshold, if the number is within the range, it is close to the threshold, otherwise it is not close to the threshold.

19. The method according to Claim 18, further comprising:
the UE in the CELL-PCH state, detecting the recounting indication information and responding to the recounting indication information by initiating the cell updating procedure according to the recounting indication information and the received MBMS access information;
or the UE in the CELL-FACH state detecting the recounting indication information and responding to the recounting indication information by initiating the cell update procedure or responding via the control channel according to the recounting indication information and the received MBMS access information.

20. The method according to Claim 1, wherein: if the counting result of the number of UEs is less than the pre-defined threshold for determining whether to use the PTM transmission mode, repeating the recounting procedure for pre-defined times, if the results of repeated recounting for continuous pre-defined times are all less than the threshold for determining whether to use the PTM transmission mode, determining to use the PTP transmission mode.

21. The method according to Claim 1, further comprising: the RAN determining to UES the PTM transmission mode, making the UEs return to the idle mode by an RRC connection releasing procedure or making the UEs in the URA-PCH state return to the previous state.

22. A system for recounting in Multimedia Broadcast/Multicast Service, MBMS, comprising:
a user equipment, UE, or UEs comprising:
a first module, for detecting recounting indication information for an MBMS service (502);
a second module, for detecting MBMS access information;
a third module, for responding to the recounting indication information by establishing a radio resource control, RRC, connection according to the recounting indication information and MBMS access information (505) received when the UE or UEs is idle mode; and
a fourth module, for responding to the recounting indication information by initiating a cell update procedure according to the recounting indication information and MBMS access information (505) received when the UE or UEs is in a UMTS Radio Access Network, UTRAN, Registration Area Paging Channel, URA-PCH, state; and the system further comprising:
a radio access network, RAN, adapted to send recounting indication information and the MBMS access information to User Equipment, UE, or UEs (501) located in the RAN coverage area, the recounting information being sent during use of a point-to-multipoint, PTM, transmission mode:
and adapted to: count the number of UEs which have joined the MBMS service and are within a cell according to the state of the UEs respectively (507), wherein the number of UEs including the number of UEs in the idle mode and having joined the MBMS service, and the number of UEs in the URA-PCH state and having joined the MBMS service;
determine whether the number of UES reaches a pre-defined threshold for determining whether to continue to use the PTM transmission mode;
continue to use the PTM transmission mode if the number of UES reaches the pre-defined threshold;
switch transmission mode from the PTM transmission mode to a Point-to-Point, PTP, transmission mode if the number of UEs does not reach the pre-defined threshold.

## Patentansprüche

1. Verfahren zum Nachzählen beim Multimedia Broadcast/Multicast Service MBMS, wenn sich ein Funkzugangsnetz RAN vorbereitet, eine Nachzählprozedur einzuleiten, mit den folgenden Schritten:
das RAN sendet Nachzählindikationsinformationen für einen MBMS-Dienst und
MBMS-Zugangsinformationen zu einem Benutzergerät UE oder UEs (501), die sich in dem RAN-Abdeckungsgebiet befinden, wobei die Nachzählinformationen während der Verwendung eines Punkt-zu-Mehrpunkt- bzw. PTM-Übertragungsmodus gesendet werden;
das UE oder die UEs detektieren die Nachzählindikationsinformationen (502) und
antworten auf die Nachzählindikationsinformationen, wobei, wenn sich das UE oder
die UEs in einem Leerlaufmodus befinden, das UE oder die UEs eine Verbindung der Funkbetriebsmittelsteuerung RRC gemäß den Nachzählindikationsinformationen und
empfangenen MBMS-Zugangsinformationen (505) herstellen, um auf die Nachzählindikationsinformationen zu antworten,
wenn sich das UE oder die UEs in einem Zustand des UMTS Radio Access Network bzw. UTRAN Registration Area Paging Channel URA-PCH befinden, das UE oder
die UEs eine Zellenaktualisierungsprozedur gemäß den Nachzählindikationsinformationen und empfangenen MBMS-Zugangsinformationen (505) einleiten, um auf die Nachzählindikationsinformationen zu antworten; und
das RAN zählt die Anzahl der UEs, die sich dem MBMS-Dienst angeschlossen haben und sich in einer Zelle befinden, jeweils gemäß dem Zustand der UEs (507), wobei die Anzahl der UEs die Anzahl der UEs, die sich im Leerlaufmodus befinden und sich dem MBMS-Dienst angeschlossen haben, und die Anzahl der UEs, die sich im URA-PCH-Zustand befinden und sich dem MBMS-Dienst angeschlossen haben, umfasst;
das RAN bestimmt, ob die Anzahl der UEs eine vordefinierte Schwelle erreicht, um zu bestimmen, ob der PTM-Übertragungsmodus weiter zu verwenden ist;
das RAN benutzt den PTM-Übertragungsmodus weiter, falls die Anzahl der UEs die vordefinierte Schwelle erreicht;
das RAN wechselt den Übertragungsmodus von dem PTM-Übertragungsmodus zu einem Punkt-zu-Punkt bzw. PTP-Übertragungsmodus, falls die Anzahl der UEs die vordefinierte Schwelle nicht erreicht.

2. Verfahren nach Anspruch 1, wobei der Schritt, in dem ein RAN die Nachzählindikationsinformationen und die MBMS-Zugangsinformationen sendet, Folgendes umfasst:
Setzen der Nachzählindikationsinformationen so, dass sie eine MBMS-Dienstidentität umfassen,
Hinzufügen der MBMS-Dienstidentität und eines ersten Wahrscheinlichkeitsfaktors zu den MBMS-Zugangsinformationen und
Senden der Nachzählindikationsinformationen und der MBMS-Zugangsinformationen zu den UEs jeweils über einen MBMS-Punkt-zu-Mehrpunkt-Steuerkanal MCCH (501).

3. Verfahren nach Anspruch 2, wobei der Schritt, bei dem die UEs die Nachzählindikationsinformationen detektieren und auf die Nachzählindikationsinformationen antworten, Folgendes umfasst:
die UEs im Leerlaufmodus empfangen die MBMS-Zugangsinformationen, finden den ersten Wahrscheinlichkeitsfaktor der MBMS-Dienstidentität, die mit der in den Nachzählindikationsinformationen identisch ist, prüfen den ersten Wahrscheinlichkeitsfaktor und antworten auf die Nachzählindikationsinformationen durch Einleiten der RRC-Verbindungsherstellungsprozedur, falls die Prüfung bestanden wird; und
die UEs im URA-PCH-Zustand empfangen die MBMS-Zugangsinformationen, finden den ersten Wahrscheinlichkeitsfaktor der MBMS-Dienstidentität, die mit der in den Nachzählindikationsinformationen identisch ist, prüfen den ersten Wahrscheinlichkeitsfaktor und antworten auf die Nachzählindikationsinformationen durch Einleiten der Zellenaktualisierungsprozedur, falls die Prüfung bestanden wird.

4. Verfahren nach Anspruch 2, ferner mit den folgenden Schritten:
vor dem Senden der Nachzählindikationsinformationen zählt das RAN die Anzahl der UEs in dem RAN, die sich im URA-PCH-Zustand befinden, und entscheidet, ob ein zweiter Wahrscheinlichkeitsfaktor für die UEs in dem RAN, die sich im URA-PCH-Zustand befinden, zu verwenden ist, gemäß dem Zählergebnis (601);
falls entschieden wird, dass der zweite Wahrscheinlichkeitsfaktor zu verwenden ist, setzt das RAN die Nachzählindikationsinformationen, die die MBMS-Dienstidentität umfassen und angeben, dass darin der zweite Wahrscheinlichkeitsfaktor benutzt wird, fügt die MBMS-Dienstidentität, den ersten Wahrscheinlichkeitsfaktor und den zweiten Wahrscheinlichkeitsfaktor zu den MBMS-Zugangsinformationen hinzu und sendet die Nachzählindikationsinformationen und die MBMS-Zugangsinformationen jeweils über den MCCH zu den UEs (602).

5. Verfahren nach Anspruch 4, wobei der Schritt zum Bestimmen gemäß dem Zählergebnis, ob der zweite Wahrscheinlichkeitsfaktor für die UEs in dem RAN, die sich im URA-PCH-Zustand befinden, zu verwenden ist (601) Folgendes umfasst:
das RAN schätzt den Wert des zweiten Wahrscheinlichkeitsfaktors gemäß der Anzahl der UEs in dem RAN, die sich im URA-PCH-Zustand befinden, und verwendet einen größeren zweiten Wahrscheinlichkeitsfaktor, falls die Anzahl klein ist, verwendet einen kleineren zweiten Wahrscheinlichkeitsfaktor, falls die Anzahl groß ist; wählt den ersten Wahrscheinlichkeitsfaktor anstelle des zweiten Wahrscheinlichkeitsfaktors,
falls der geschätzte zweite Wahrscheinlichkeitsfaktor dem ersten Wahrscheinlichkeitsfaktor nahehommt; und wählt andernfalls den zweiten Wahrscheinlichkeitsfaktor.

6. Verfahren nach Anspruch 5, wobei durch eine vordefinierte Schwelle der Anzahl der UEs in dem RAN, die sich im URA-PCH-Zustand befinden, bestimmt wird, ob die Anzahl der UEs in dem RAN, die sich im URA-PCH-Zustand befinden, klein oder groß ist;
und durch einen vordefinierten Differenzbereich zwischen den Wahrscheinlichkeitsfaktorten bestimmt wird, ob der geschätzte zweite Wahrscheinlichkeitsfaktor dem ersten Wahrscheinlichkeitsfaktor nahehommt, wobei die Faktoren einander nahe sind, falls die Differenz in dem Bereich liegt, und die Faktoren einander nicht nahe sind, falls die Differenz jenseits des Bereichs liegt.

7. Verfahren nach Anspruch 4, falls das RAN entscheidet, den zweiten Wahrscheinlichkeitsfaktor für die UEs in dem RAN, die sich im URA-PCH-Zustand befinden, zu verwenden, wobei der Schritt, bei dem die UEs die Nachzählindikationsinformationen detektieren und auf die Nachzählindikationsinformationen antworten, Folgendes umfasst:
beim Empfang der MBMS-Zugangsinformationen lesen die UEs im Leerlaufmodus den ersten Wahrscheinlichkeitsfaktor der MBMS-Dienstidentität, die mit der in den Nachzählindikationsinformationen identisch ist, und prüfen den ersten Wahrscheinlichkeitsfaktor; und die UEs im Leerlaufmodus, die die Prüfung bestanden haben, leiten die RRC-Verbindungsherstellungsprozedur ein (609);
beim Empfang der MBMS-Zugangsinformationen lesen die UEs im URA-PCH-Zustand den zweiten Wahrscheinlichkeitsfaktor der MBMS-Dienstidentität, die mit der in den Nachzählindikationsinformationen identisch ist, und prüfen den zweiten Wahrscheinlichkeitsfaktor; die UEs im URA-PCH-Zustand, die die Prüfung bestanden haben, leiten die Zellenaktualisierungsprozedur ein (607).

8. Verfahren nach Anspruch 3 oder 4, ferner mit den folgenden Schritten:
ein UE in einem Zustand des Zellen-Paging-Kanals CELL-PCH detektiert die Nachzählindikationsinformationen, empfängt die MBMS-Zugangsinformationen und findet den Wahrscheinlichkeitsfaktor, der der MBMS-Dienstidentität entspricht, die mit der MBMS-Dienstidentität in den Nachzählindikationsinformationen identisch ist, prüft diesen Wahrscheinlichkeitsfaktor; und antwortet nach dem Bestehen der Prüfung auf die Nachzählindikationsinformationen durch Einleiten der Zellenaktualisierungsprozedur;
oder ein UE in einem Zustand des Zellen-Vorwärtszugangskanals CELL-FACH überwacht die Nachzählindikationsinformationen, empfängt die MBMS-Zugangsinformationen, findet den Wahrscheinlichkeitsfaktor, der der MBMS-Dienstidentität entspricht, die mit der M B MS-Dienstidentität in den Nachzählindikationsinformationen identisch ist, prüft den Wahrscheinlichkeitsfaktor;
und antwortet nach dem Bestehen der Prüfung auf die Nachzählindikationsinformationen durch Einleiten einer Zellenaktualisierungsprozedur oder Antworten über den Steuerkanal.

9. Verfahren nach Anspruch 1, wobei der Schritt, bei dem die UEs die Nachzählindikationsinformationen detektieren (502), Folgendes umfasst:
Überwachen des MCCH, um eine Ankündigungsnachricht zu empfangen; und
Detektieren von Nachzählindikationsinformationen für einen MBMS-Dienst in der von dem MCCH empfangenen Ankündigungsnachricht.

10. Verfahren nach Anspruch 1, wobei der Schritt, bei dem das RAN gemäß dem Zustand der UEs jeweils die Anzahl der UEs zählt, die sich dem MBMS-Dienst angeschlossen haben und die sich in einer Zelle befinden, Folgendes umfasst:
das RAN zählt die UEs, die an dem MBMS-Dienst interessiert sind, durch Kombinieren der UE-Verknüpfung von dem CN und der empfangenen Zählantwort von dem UE.

11. Verfahren nach Anspruch 1, ferner mit den folgenden Schritten: das RAN zählt die Anzahl der UEs in dem RAN, die sich im URA-PCH-Zustand befinden, vor dem Senden der Nachzählindikationsinformationen, falls die Anzahl der UEs in dem RAN, die sich im URA-PCH-Zustand befinden, groß ist, gibt das RAN durch die Nachzählindikationsinformationen an, dass es notwendig ist, die Anzahl der UEs im URA-PCH-Zustand, die sich dem MBMS-Dienst angeschlossen haben und die sich in der Zelle befinden, nachzuzählen.

12. Verfahren nach Anspruch 11, wobei durch Definieren einer Schwelle für die Anzahl der UEs in dem RAN, die sich im URA-PCH-Zustand befinden, oder durch Vordefinieren einer Schwelle für den Anteil der UEs in dem RAN, die sich im URA-PCH-Zustand befinden, unter allen UEs in dem RRC-Verbunden-Zustand bestimmt wird, ob die Anzahl der UEs in dem RAN, die sich im URA-PCH-Zustand befinden, klein oder groß ist.

13. Verfahren nach Anspruch 1, ferner mit den folgenden Schritten: das RAN zählt die Anzahl der UEs in jedem Zustand des CELL-FACH und des CELL-PCH vor dem Senden der Nachzählindikationsinformationen; falls das Zählergebnis zeigt, dass die Gesamtzahl der UEs in diesen zwei Zuständen die Schwelle zum Bestimmen, ob der Punkt-zu-Mehrpunkt- bzw. PTM-Übertragungsmodus zu verwenden ist, erreicht, stoppt das RAN die Nachzählprozedur.

14. Verfahren nach Anspruch 1, ferner mit den folgenden Schritten: das RAN zählt die Anzahl der UEs in jedem Zustand des CELL-FACH und des CELL-PCH vor dem Senden der Nachzählindikationsinformationen; falls das Zählergebnis zeigt, dass die Gesamtzahl der UEs in diesen zwei Zuständen die Schwelle zum Bestimmen, ob der Punkt-zu-Mehrpunkt- bzw. PTM-Übertragungsmodus zu verwenden ist, erreicht, fragt das RAN UEs in diesen zwei Zuständen nochmals darüber ab, ob die UEs daran interessiert sind, die Nachzählprozedur zu empfangen und auszuführen, bis die zum Bestimmen, ob der PTM-Übertragungsmodus zu verwenden ist, verwendete Schwelle erreicht ist.

15. Verfahren nach Anspruch 13 oder 14, wobei durch Setzen einer Überschreitungszahlschwelle bestimmt wird, ob die Gesamtzahl der UEs in diesen zwei Zuständen zusammenaddiert die Schwelle, die zum Bestimmen, ob der PTM-Übertragungsmodus zu verwenden ist, verwendet wird, beträchtlich überschreitet.

16. Verfahren nach Anspruch 14, wobei das RAN die UEs in den zwei verbundenen Zuständen direkt über einen dedizierten oder gemeinsamen Kanal befragt.

17. Verfahren nach Anspruch 1, ferner mit den folgenden Schritten: das RAN zählt die Anzahl der UEs in den zwei verbundenen Zuständen des CELL-FACH und CELL-PCH vor dem Senden der Nachzählindikationsinformationen; falls das Zählergebnis zeigt, dass die Anzahl der UEs in diesen zwei Zuständen zusammenaddiert der zum Bestimmen, ob der PTM-Übertragungsmodus zu verwenden ist, verwendeten Schwelle nicht nahekommt, gibt das RAN durch die Nachzählindikationsinformationen an, dass es notwendig ist, die Anzahl der UEs im URA-PCH-Zustand, die sich dem MBMS-Dienst angeschlossen haben und die sich in der Zelle befinden, nachzuzählen.

18. Verfahren nach Anspruch 17, wobei durch einen vordefinierten Bereich für Nähe zu der Schwelle bestimmt wird, ob die Anzahl der UEs in den zwei Zuständen zusammenaddiert der Schwelle nahekommt, wobei, falls die Anzahl in dem Bereich liegt, die der Schwelle nahe ist und sie andernfalls der Schwelle nicht nahe ist.

19. Verfahren nach Anspruch 18, ferner mit den folgenden Schritten:
das UE im CELL-PCH-Zustand detektiert die Nachzählindikationsinformationen und antwortet auf die Nachzählindikationsinformationen durch Einleiten der Zellenaktualisierungsprozedur gemäß den Nachzählindikationsinformationen und den empfangenen MBMS-Zugangsinformationen;
o d e r d a s U E im C E L L-FACH-Zustand detektiert die Nachzählindikationsinformationen und antwortet auf die Nachzählindikationsinformationen durch Einleiten der Zellenaktualisierungsprozedur oder antwortet über den Steuerkanal gemäß den Nachzählindikationsinformationen und den empfangenen MBMS-Zugangsinformationen.

20. Verfahren nach Anspruch 1, wobei, falls das Zählergebnis der Anzahl der UEs kleiner als die vordefinierte Schwelle zum Bestimmen, ob der PTM-Übertragungsmodus zu verwenden ist, ist, die Nachzählprozedur für vordefinierte Male wiederholt wird, und falls die Ergebnisse des wiederholten Nachzählens für kontinuierliche vordefinierte Male alle kleiner als die Schwelle zum Bestimmen, ob der PTM-Übertragungsmodus zu verwenden ist, sind, bestimmt wird, den PTP-Übertragungsmodus zu verwenden.

21. Verfahren nach Anspruch 1, ferner mit den folgenden Schritten: das RAN bestimmt, den PTM-Übertragungsmodus zu verwenden, lässt die UEs durch eine RRC-Verbindungsfreigabeprozedur zu dem Leerlaufmodus zurückkehren oder lässt die UEs im URA-PCH-Zustand zu dem vorherigen Zustand zurückkehren.

22. System zum Nachzählen beim Multimedia Broadcast/Multicast Service MBMS, umfassend:
ein Benutzergerät UE oder UEs, umfassend:
ein erstes Modul zum Detektieren von Nachzählindikationsinformationen für einen MBMS-Dienst (502);
ein zweites Modul zum Detektieren von MBMS-Zugangsinformationen;
ein drittes Modul zum Antworten auf die Nachzählindikationsinformationen durch Herstellen einer Verbindung der Funkbetriebsmittelsteuerung RRC gemäß den Nachzählindikationsinformationen und MBMS-Zugangsinformationen (505), die empfangen werden, wenn sich das UE oder die UEs im Leerlaufmodus befinden; und
ein viertes Modul zum Antworten auf die Nachzählindikationsinformationen durch Einleiten einer Zellenaktualisierungsprozedur gemäß den Nachzählindikationsinformationen und MBMS-Zugangsinformationen (505), die empfangen werden, wenn sich das UE oder die UEs in einem Zustand des UMTS Radio Access Network UTRAN Registration Area Paging Channel URA-PCH befinden; und wobei das System ferner Folgendes umfasst:
ein Funkzugangsnetz RAN, das dafür ausgelegt ist, Nachzählindikationsinformationen und die MBMS-Zugangsinformationen zu einem Benutzergerät UE oder UEs (501) zu senden, die sich in dem RAN-Abdeckungsgebiet befinden, wobei die Nachzählinformationen während der Verwendung eines Punkt-zu-Mehrpunkt- bzw. PTM-Übertragungsmodus gesendet werden; und für Folgendes ausgelegt ist:
Zählen der Anzahl der UEs, die sich dem MBMS-Dienst angeschlossen haben und sich in einer Zelle befinden, jeweils gemäß dem Zustand der UEs (507), wobei die Anzahl der UEs die Anzahl der UEs, die sich im Leerlaufmodus befinden und sich dem MBMS-Dienst angeschlossen haben, und die Anzahl der UEs, die sich im URA-PCH-Zustand befinden und sich dem MBMS-Dienst angeschlossen haben, umfasst;
Bestimmen, ob die Anzahl der UEs eine vordefinierte Schwelle erreicht, um zu bestimmen, ob der PTM-Übertragungsmodus weiter zu verwenden ist;
Weiterbenutzen des PTM-Übertragungsmodus, falls die Anzahl der UEs die vordefinierte Schwelle erreicht;
Wechseln des Übertragungsmodus von dem PTM-Übertragungsmodus zu einem Punkt-zu-Punkt bzw. PTP-Übertragungsmodus, falls die Anzahl der UEs die vordefinierte Schwelle nicht erreicht.

## Revendications

1. Procédé de recomptage dans un service de diffusion/multidiffusion multimédia, dit MBMS, lorsqu'un réseau d'accès radio, dit RAN, se prépare à lancer une procédure de recomptage, le procédé comprenant les étapes suivantes :
envoi par le RAN d'informations d'indication de recomptage associées à un service MBMS et d'informations d'accès MBMS à un ou plusieurs équipements d'utilisateur, dits UE, (501) situés dans la zone de desserte du RAN, les informations de recomptage étant envoyées au cours de l'utilisation d'un mode de transmission point à multipoint, dit PTM ;
détection par le ou les UE des informations d'indication de recomptage (502) et réponse du ou des UE aux informations d'indication de recomptage, si le ou les UE est/sont dans un mode inactif, ledit ou lesdits UE établissant une connexion de commande de ressources radio, dite RRC, compte tenu des informations d'indication de recomptage et des informations d'accès MBMS reçues (505) pour répondre aux informations d'indication de recomptage ;
si le ou les UE est/sont dans un état de canal d'appel unilatéral de zone d'enregistrement de réseau d'accès radio UMTS, dit UTRAN, dit URA-PCH, ledit ou lesdits UE lance(nt) une procédure de mise à jour de cellule compte tenu des informations d'indication de recomptage et des informations d'accès MBMS reçues (505) pour répondre aux informations d'indication de recomptage ; et
comptage par le RAN du nombre d'UE qui ont rejoint le service MBMS et se situent dans une cellule compte tenu de l'état respectif des UE (507), le nombre d'UE comprenant le nombre d'UE dans le mode inactif qui ont rejoint le service MBMS et le nombre d'UE dans l'état URA-PCH qui ont rejoint le service MBMS ;
établissement par le RAN si le nombre d'UE atteint un seuil préalablement défini utilisé pour établir s'il convient de poursuivre l'utilisation du mode de transmission PTM ;
poursuite de l'utilisation par le RAN du mode de transmission PTM si le nombre d'UE atteint le seuil préalablement défini ;
commutation par le RAN du mode de transmission pour passer du mode de transmission PTM à un mode de transmission point à point, dit PTP, si le nombre d'UE n'atteint pas le seuil préalablement défini.

2. Procédé selon la revendication 1, l'étape d'envoi par le RAN des informations d'indication de recomptage et des informations d'accès MBMS comprenant les étapes suivantes :
configuration des informations d'indication de recomptage de sorte qu'elles contiennent une identité de service MBMS,
ajout de l'identité de service MBMS et d'un premier facteur de probabilité aux informations d'accès MBMS, et
envoi respectif des informations d'indication de recomptage et des informations d'accès MBMS aux UE par un canal de commande point à multipoint MBMS, dit MCCH (501).

3. Procédé selon la revendication 2, l'étape de détection par les UE des informations d'indication de recomptage et de réponse des UE aux informations d'indication de recomptage comprenant les étapes suivantes :
réception par les UE dans le mode inactif des informations d'accès MBMS, identification par les UE du premier facteur de probabilité de l'identité de service MBMS qui est identique à celui contenu dans les informations d'indication de recomptage, vérification par les UE du premier facteur de probabilité, et réponse des UE aux informations d'indication de recomptage en lançant la procédure d'établissement de connexion RRC en cas de succès de la vérification ; et
réception par les UE dans l'état URA-PCH des informations d'accès MBMS, identification par les UE du premier facteur de probabilité de l'identité de service MBMS qui est identique à celui contenu dans les informations d'indication de recomptage, vérification par les UE du premier facteur de probabilité, et réponse des UE aux informations d'indication de recomptage en lançant la procédure de mise à jour de cellule en cas de succès de la vérification.

4. Procédé selon la revendication 2, comprenant en outre les étapes suivantes :
préalablement à l'envoi des informations d'indication de recomptage, comptage par le RAN du nombre d'UE dans le RAN dans l'état URA-PCH, et décision par le RAN s'il convient d'utiliser un deuxième facteur de probabilité pour les UE dans le RAN dans l'état URA-PCH compte tenu du résultat du comptage (601) ;
en cas de décision qu'il convient d'utiliser le deuxième facteur de probabilité, configuration par le RAN des informations d'indication de recomptage qui contiennent l'identité de service MBMS et indiquent que le deuxième facteur de probabilité y est utilisé, ajout de l'identité de service MBMS, du premier facteur de probabilité et du deuxième facteur de probabilité aux informations d'accès MBMS, et
envoi respectif des informations d'indication de recomptage et des informations d'accès MBMS aux UE par le MCCH (602).

5. Procédé selon la revendication 4, l'étape de décision s'il convient d'utiliser le deuxième facteur de probabilité pour les UE dans le RAN dans l'état URA-PCH compte tenu du résultat du comptage (601) comprenant les étapes suivantes :
estimation par le RAN de la valeur du deuxième facteur de probabilité compte tenu du nombre d'UE dans le RAN dans l'état URA-PCH, en utilisant un deuxième facteur de probabilité plus élevé si le nombre est petit, en utilisant un deuxième facteur de probabilité moins élevé si le nombre est grand ; si le deuxième facteur de probabilité estimé est proche du premier facteur de probabilité, choix par le RAN du premier facteur de probabilité à la place du deuxième facteur de probabilité ; dans le cas contraire, choix par le RAN du deuxième facteur de probabilité.

6. Procédé selon la revendication 5, un seuil préalablement défini du nombre d'UE dans le RAN dans l'état URA-PCH permettant d'établir si le nombre d'UE dans le RAN dans l'état URA-PCH est petit ou grand ; et
un intervalle de différence préalablement défini entre les facteurs de probabilité permettant d'établir si le deuxième facteur de probabilité estimé est proche du premier facteur de probabilité, autrement dit si la différence s'inscrit dans l'intervalle, les facteurs sont proches, et si la différence ne s'inscrit pas dans l'intervalle, les facteurs ne sont pas proches.

7. Procédé selon la revendication 4, en cas de décision par le RAN qu'il convient d'utiliser le deuxième facteur de probabilité pour les UE dans le RAN dans l'état URA-PCH, l'étape de détection par les UE des informations d'indication de recomptage et de réponse des UE aux informations d'indication de recomptage comprenant les étapes suivantes :
dès réception des informations d'accès MBMS, lecture par les UE dans le mode inactif du premier facteur de probabilité de l'identité de service MBMS qui est identique à celui contenu dans les informations d'indication de recomptage, et vérification par les UE du premier facteur de probabilité ; lancement par les UE dans le mode inactif pour lesquels la vérification a été couronnée de succès de la procédure d'établissement de connexion RRC (609) ;
dès réception des informations d'accès MBMS, lecture par les UE dans l'état URA-PCH du deuxième facteur de probabilité de l'identité de service MBMS qui est identique à celui contenu dans les informations d'indication de recomptage et vérification par les UE du deuxième facteur de probabilité ; lancement par les UE dans l'état URA-PCH de la procédure de mise à jour de cellule (607).

8. Procédé selon la revendication 3 ou 4, comprenant en outre les étapes suivantes :
détection par un UE dans un état de canal d'appel unilatéral de cellule, dit CELL-PCH, des informations d'indication de recomptage, réception par l'UE des informations d'accès MBMS, et identification par l'UE du facteur de probabilité correspondant à l'identité de service MBMS qui est identique à l'identité de service MBMS contenue dans les informations d'indication de recomptage, vérification par l'UE de ce facteur de probabilité ; en cas de succès de la vérification, réponse de l'UE aux informations d'indication de recomptage en lançant la procédure de mise à jour de cellule ; ou
surveillance par un UE dans un état de canal d'accès aller de cellule, dit CELL-FACH, des informations d'indication de recomptage, réception par l'UE des informations d'accès MBMS, identification par l'UE du facteur de probabilité correspondant à l'identité de service MBMS qui est identique à l'identité de service MBMS contenue dans les informations d'indication de recomptage, vérification par l'UE du facteur de probabilité ; en cas de succès de la vérification, réponse de l'UE aux informations d'indication de recomptage en lançant une procédure de mise à jour de cellule ou réponse de l'UE par un canal de commande.

9. Procédé selon la revendication 1, l'étape de détection par les UE des informations d'indication de recomptage (502) comprenant les étapes suivantes :
surveillance du MCCH pour la réception d'un message de notification ; et
détection d'informations d'indication de recomptage pour un service MBMS dans le message de notification reçu du MCCH.

10. Procédé selon la revendication 1, l'étape de comptage par le RAN du nombre d'UE qui ont rejoint le service MBMS et se situent dans une cellule compte tenu de l'état respectif des UE comprenant : le comptage par le RAN des UE intéressés par le service MBMS par combinaison des UE en liaison avec le CN et de la réponse de comptage reçue des UE.

11. Procédé selon la revendication 1, comprenant en outre l'étape suivante : comptage par le RAN du nombre d'UE dans le RAN dans l'état URA-PCH préalablement à l'envoi des informations d'indication de recomptage ; si le nombre d'UE dans le RAN dans l'état URA-PCH est grand, indication par le RAN de la nécessité de recompter le nombre d'UE dans l'état URA-PCH qui ont rejoint le service MBMS et se situent dans la cellule par le biais des informations d'indication de recomptage.

12. Procédé selon la revendication 11, la définition d'un seuil du nombre d'UE dans le RAN dans l'état URA-PCH ou la définition préalable d'un seuil d'une proportion d'UE dans le RAN dans l'état URA-PCH parmi tous les UE dans l'état de connexion RRC permettant d'établir si le nombre d'UE dans le RAN dans l'état URA-PCH est petit ou grand.

13. Procédé selon la revendication 1, comprenant en outre le comptage par le RAN du nombre d'UE dans chaque état CELL-FACH et CELL-PCH préalablement à l'envoi des informations d'indication de recomptage ; si le résultat du comptage montre que le nombre total d'UE dans ces deux états atteint le seuil utilisé pour établir s'il convient d'utiliser le mode de transmission point à multipoint, dit PTM, interruption par le RAN de la procédure de recomptage.

14. Procédé selon la revendication 1, comprenant en outre le comptage par le RAN du nombre d'UE dans chaque état CELL-FACH et CELL-PCH préalablement à l'envoi des informations d'indication de recomptage ; si le résultat du comptage montre que le nombre total d'UE dans ces deux états atteint le seuil utilisé pour établir s'il convient d'utiliser le mode de transmission point à multipoint, dit PTM, interrogation par le RAN des UE dans ces deux états pour établir si les UE sont intéressés par une nouvelle réception et une nouvelle exécution de la procédure de recomptage jusqu'à ce que le seuil utilisé pour établir s'il convient d'utiliser le mode de transmission PTM soit atteint.

15. Procédé selon la revendication 13 ou 14, la fixation d'un seuil de nombre en excès permettant d'établir si le nombre total d'UE dans ces deux états combinés excède largement le seuil utilisé pour établir s'il convient d'utiliser le mode de transmission PTM.

16. Procédé selon la revendication 14, le RAN interrogeant les UE dans les deux états connectés directement par un canal dédié ou commun.

17. Procédé selon la revendication 1, comprenant en outre le comptage par le RAN du nombre d'UE dans les deux états connectés de CELL-FACH et de CELL-PCH préalablement à l'envoi des informations d'indication de recomptage ; si le résultat du comptage montre que le nombre combiné d'UE dans ces deux états n'est pas proche du seuil utilisé pour établir s'il convient d'utiliser le mode de transmission PTM, indication par le RAN de la nécessité de recompter le nombre d'UE dans l'état URA-PCH qui ont rejoint le service MBMS et se situent dans la cellule par le biais des informations d'indication de recomptage.

18. Procédé selon la revendication 17, un intervalle préalablement défini de proximité vis-à-vis du seuil permettant d'établir si le nombre combiné d'UE dans les deux états est proche du seuil, autrement dit si le nombre s'inscrit dans l'intervalle, il est proche du seuil, dans le cas contraire il n'est pas proche du seuil.

19. Procédé selon la revendication 18, comprenant en outre l'étape suivante :
détection par l'UE dans l'état CELL-PCH des informations d'indication de recomptage et réponse de l'UE aux informations d'indication de recomptage en lançant la procédure de mise à jour de cellule compte tenu des informations d'indication de recomptage et des informations d'accès MBMS reçues ; ou
détection par l'UE dans l'état CELL-FACH des informations d'indication de recomptage et réponse de l'UE aux informations d'indication de recomptage en lançant la procédure de mise à jour de cellule, ou réponse de l'UE par le canal de commande compte tenu des informations d'indication de recomptage et des informations d'accès MBMS reçues.

20. Procédé selon la revendication 1, dans lequel, si le résultat du comptage du nombre d'UE est inférieur au seuil préalablement défini utilisé pour établir s'il convient d'utiliser le mode de transmission PTM, la procédure de recomptage est répétée un nombre de fois préalablement défini ; si les résultats du recomptage répété un nombre de fois continu préalablement défini sont tous inférieurs au seuil utilisé pour établir s'il convient d'utiliser le mode de transmission PTM, établir qu'il convient d'utiliser le mode de transmission PTP.

21. Procédé selon la revendication 1, comprenant en outre la décision par le RAN qu'il convient d'utiliser le mode de transmission PTM, le renvoi par le RAN des UE dans le mode inactif par une procédure de libération de connexion RRC ou le renvoi par le RAN des UE dans l'état URA-PCH à l'état précédent.

22. Système de recomptage dans un service de diffusion/multidiffusion multimédia, dit MBMS, le système comprenant :
un ou plusieurs équipements d'utilisateur, UE, comprenant :
un premier module, permettant la détection d'informations d'indication de recomptage pour un service MBMS (502) ;
un deuxième module, permettant la détection d'informations d'accès MBMS ;
un troisième module, permettant la réponse aux informations d'indication de recomptage par établissement d'une connexion de commande de ressources radio, dite RRC, compte tenu des informations d'indication de recomptage et des informations d'accès MBMS reçues (505) si le ou les UE est/sont dans un mode inactif, ; et
un quatrième module, permettant la réponse aux informations d'indication de recomptage par lancement d'une procédure de mise à jour de cellule, compte tenu des informations d'indication de recomptage et des informations d'accès MBMS reçues (505) si le ou les UE est/sont dans un état de canal d'appel unilatéral de zone d'enregistrement de réseau d'accès radio UMTS, dit UTRAN, dit URA-PCH ; et
le système comprenant en outre :
un réseau d'accès radio, dit RAN, conçu pour envoyer des informations d'indication de recomptage et les informations d'accès MBMS à un ou plusieurs équipements d'utilisateur, dits UE, (501) situés dans la zone de desserte du RAN, les informations de recomptage étant envoyées au cours de l'utilisation d'un mode de transmission point à multipoint, dit PTM ; et conçu pour :
compter le nombre d'UE qui ont rejoint le service MBMS et se situent dans une cellule compte tenu de l'état respectif des UE (507), le nombre d'UE comprenant le nombre d'UE dans le mode inactif qui ont rejoint le service MBMS et le nombre d'UE dans l'état URA-PCH qui ont rejoint le service MBMS ;
établir si le nombre d'UE atteint un seuil préalablement défini utilisé pour établir s'il convient de poursuivre l'utilisation du mode de transmission PTM ;
poursuivre l'utilisation du mode de transmission PTM si le nombre d'UE atteint le seuil préalablement défini ;
commuter le mode de transmission pour passer du mode de transmission PTM à un mode de transmission point à point, dit PTP, si le nombre d'UE n'atteint pas le seuil préalablement défini.
